# EUROPEAN PATENT APPLICATION

(11) **EP 4 656 346 A1**
(43) Date of publication of application: **03.12.2025**
(21) Application number: 25175922.1
(22) Date of filing: 13.05.2025
(51) Int. Cl.: B28B 1/30, B28B 1/29, B22F 12/67, B22F 12/33, B29C 64/214, B29C 64/223, B33Y 40/10, B29C 64/124, B33Y 10/00, B33Y 30/00

(54) **TAPE CASTING APPARATUS AND METHOD OF USING THE SAME**

(30) Priority: 28.05.2024 US 202418675936
(71) Applicant: General Electric Company, Cincinnati, Ohio 45215 (US)
(72) Inventor: GROTE, Robert L., Evendale, 45215 (US); BARNHILL, Christopher D., Evendale, 45215 (US); YANG, Xi, Evendale, 45215 (US)
(74) Representative: Hafner & Kohl PartmbB

(57) **Abstract**

A tape casting apparatus (100) including a reservoir (102) with a first side wall (118) and a second side wall (119) opposite the first side wall (118), and a foil sheet (108) moveable along a horizontal axis (116). The apparatus includes a first blade (120a) having a first edge (124a) coupled to the first side wall (118), a second edge (126a) coupled to the second side wall (119), and a first blade tip (122a) positioned at a casting height (152). The apparatus (100) includes a second blade (120b) having a first edge (124b) coupled to the first side wall (118), a second edge (126b) coupled to the second side wall (119), and a second blade tip (122b) positioned at a filtering height (150). The second blade (120b) defines an overflow control feature (140) formed therein. The reservoir (102) includes a first cavity (104a) and a second cavity (104b), wherein the first cavity (104a) is in fluid communication with the second cavity (104b) between the foil sheet (108) and the second blade (120b) and through the overflow control feature (140).

## Description

### TECHNICAL FIELD

The present disclosure relates generally to an additive manufacturing apparatus, and more particularly, to an apparatus for improving the casting behavior of ceramic slurry in a tape casting process.

### BACKGROUND

Additive manufacturing is a process in which a material is built up piece-by-piece, line-by-line, or layer-by-layer to form a resulting three-dimensional component. Stereolithography is a type of additive manufacturing process which employs a curing energy source such as a laser and a slurry containing a curable photopolymer resin. A related form of additive manufacturing is Digital Light Processing (DLP). DLP creates layered structures by exposing a slurry to an applied radiant energy using a two-dimensional projector. For each layer, the projector flashes a radiation image corresponding to the desired cross-section of the printed part on the surface of the slurry or through a transparent border of a reservoir, adjacent to a surface of the slurry. Exposure to the radiation from the projector cures the photopolymer and solidifies the pattern in the slurry and joins it to a previously-cured layer.

Unlike traditional stereolithographic methods that additively build a printed material from a large volume vat containing a slurry, DLP processes typically utilize a process known as "tape casting" in which a smaller volume of a slurry is prepared for exposure to the radiant energy source. Exposing only a small volume of the slurry is preferable because it can minimize cost and allow for the continuous cycling of the slurry to mitigate contamination from unwanted cured residue near the build surface. Tape casting processes typically include a foil sheet or roll that can move under the build platform. As the foil roll moves, a cast layer of slurry is applied to an upper surface of the foil from a reservoir. However, casting a slurry onto a foil sheet from the slurry reservoir can lead to streaking on the foil, resulting in sub-optimal wetting of the slurry and creating trapped air pockets which can decrease the uniformity of the cast layer.

### BRIEF DESCRIPTION OF THE DRAWINGS

The accompanying drawings illustrate various systems, apparatuses, devices and methods, in which like reference characters refer to like parts throughout, and in which:
FIG. 1 is a side view of an illustrative embodiment of a tape casting apparatus in accordance with various disclosed aspects herein;
FIG. 2 is a top view of an embodiment of a tape casting apparatus in accordance with various disclosed aspects herein;
FIG. 3 is a side view of an illustrative embodiment of a second blade with a plurality of bores positioned at an overflow height in accordance with various disclosed aspects herein;
FIG. 4 is a side view of an illustrative embodiment of a tape casting apparatus depicting the fluid flow of a slurry in accordance with various disclosed aspects herein;
FIG. 5 depicts a block diagram demonstrating illustrative steps of a method for using a tape casting apparatus, according to one or more embodiments shown and described herein.

The present disclosure may be embodied in several forms without departing from its spirit or essential characteristics. The scope of the present disclosure is defined in the appended claims, rather than in the specific description preceding them. All embodiments that fall within the meaning and range of equivalency of the claims are therefore intended to be embraced by the claims.

### DETAILED DESCRIPTION

Conventional tape casting apparatuses generally include a reservoir that contains a slurry positioned on a foil sheet. To dispense the slurry from the apparatus as a cast layer with an appropriate layer height, the foil sheet may be translated to move the slurry to interact with a blade. Conventional tape casting apparatuses generally includes a single blade to process the slurry as it leaves the tape casting apparatus. Conventional designs experience a number of challenges as a result of this design, including streaking due to the presence of large agglomerates within the slurry that get trapped at the first blade. Furthermore, traditional tape casting apparatus designs can produce turbulent flow within the reservoir that can inhibit uniformity of the cast layer due to unwanted air inclusion in the slurry as it leaves the apparatus.

Therefore, a need exists for a reservoir design within a tape casting apparatus featuring two or more doctor blades. A multiple blade design reduces streaking by catching the large agglomerates on the non-first blade(s) before casting, improves the slurry rheology by reducing air incorporation into the slurry, and improves the cast layer uniformity as the slurry leaves the reservoir. The inclusion of second blades can improve printer performance in additive manufacturing processes and can minimize costs by reducing foil tears within the foil sheet caused by large agglomerates wedging between the first blade and the foil sheet.

Reference will now be made to illustrative embodiments, examples of which are illustrated in the accompanying drawings. It is to be understood that other embodiments may be utilized and structural and functional changes may be made. In addition, features of the various embodiments may be combined or altered. As such, the following description is presented by way of illustration only and should not limit in any way the various alternatives and modifications that may be made to the illustrated embodiments. In this disclosure, numerous specific details provide a thorough understanding of the subject disclosure. It should be understood that aspects of this disclosure may be practiced with other embodiments not necessarily including all aspects described herein, etc.

As used herein, the words "example" and "exemplary" mean an instance, or illustration. The words "example" or "exemplary" do not indicate a key or preferred aspect or embodiment. The word "or" is intended to be inclusive rather than exclusive unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

As used herein, the terms "first," "second," and "third" may be used interchangeably to distinguish one component from another and are not intended to signify location or importance of the individual components.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

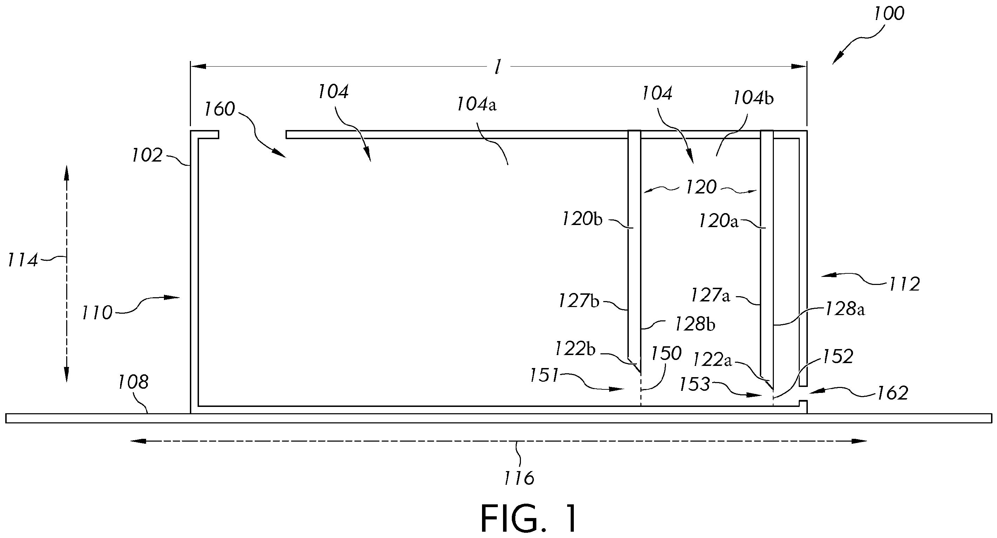

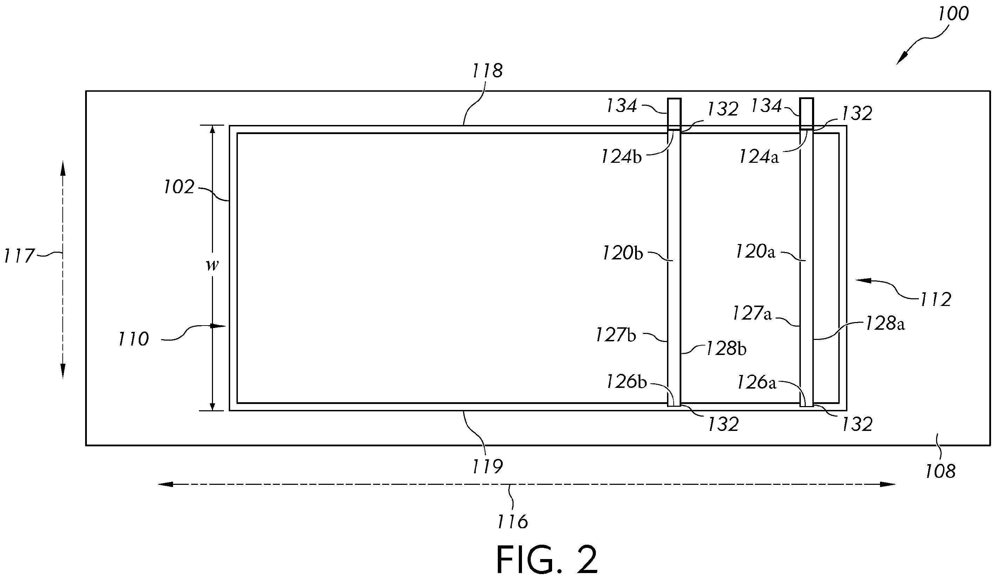

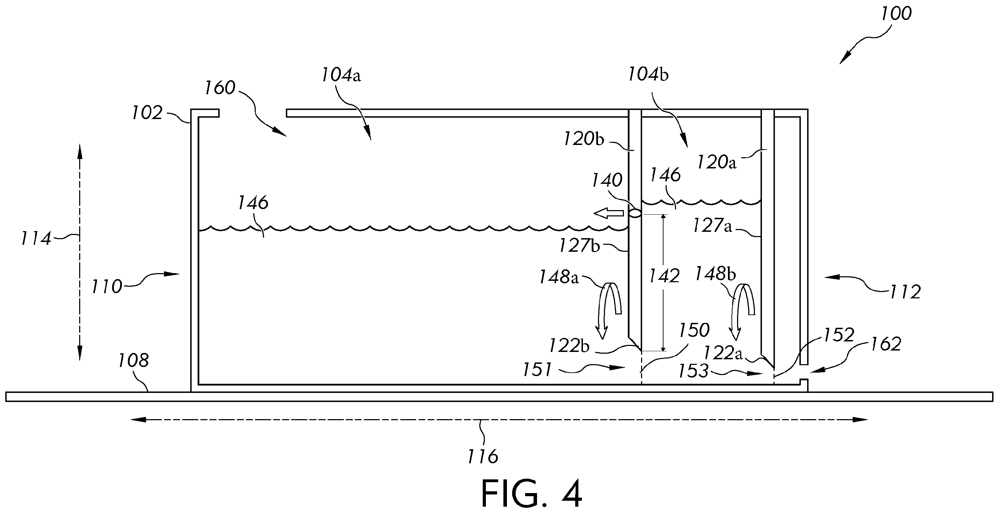

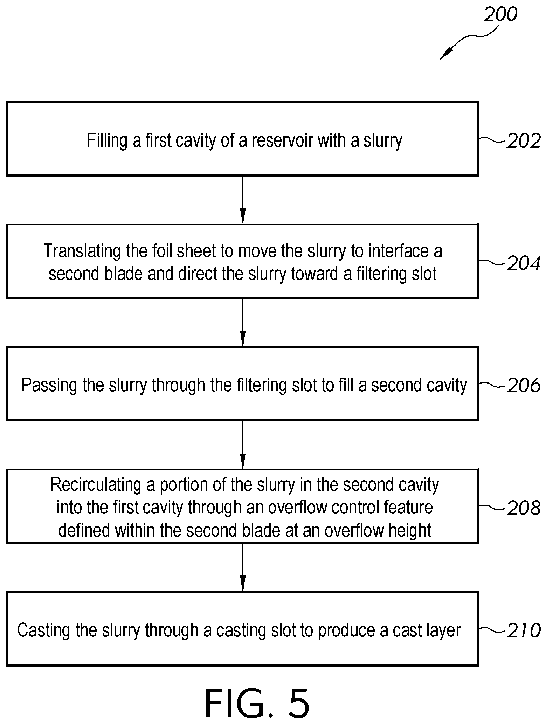

Turning to FIG. 1 and FIG. 2, shown is an embodiment of a tape casting apparatus 100. The tape casting apparatus 100 includes a reservoir 102 that may contain a slurry 146 (FIG. 4) for use in a tape casting method (e.g., method 200 in FIG. 5). The reservoir 102 may be an enclosed or partially enclosed structure that can store and/or direct the flow of a viscous liquid. The reservoir 102 includes a first side wall 118 and a second side wall 119 opposite the first side wall 118. The first side wall 118 and the second side wall 119 may be substantially parallel to one another and may be spaced apart to define a width w of the reservoir 102. The width w of the reservoir 102 may extend from an exterior surface of the first side wall 118 to an exterior surface of the second side wall 119, wherein the first side wall 118 is positioned opposite the second side wall 119 along the width w. In such embodiments, the reservoir 102 may have a rectangular or square footprint. The first side wall 118 and the second side wall 119 may extend along a horizontal axis 116 to define a length *l* of the reservoir 102. The length *l* of the reservoir 102 may extend from a first end 110 to a second end 112, wherein the second end 112 is positioned opposite the first end 110 along the horizontal axis 116. In other embodiments, the first side wall 118 and the second side wall 119 may be spaced apart across a width w of the reservoir 102 and may be non-parallel to one another. In such embodiments, the reservoir 102 may have a non-rectangular polygonal, circular, or ovular footprint. The first side wall 118 and the second side wall 119 may extend vertically along a vertical axis 114 to define a height of the reservoir 102. In embodiments, the reservoir 102 may be an enclosed or a partially-enclosed container or vessel for holding the slurry 146 (FIG. 4). In some embodiments, the first end 110 and the second end 112 may include surfaces extending between the first side wall 118 and the second side wall 119 to restrict, throttle, or direct fluid flow at the first end 110 or the second end 112. In other embodiments, each of the first end 110 and the second end 112 may be open to allow for unrestricted fluid flow through the first end 110 or the second end 112. In some embodiments, the reservoir 102 may be open along its upper most portion along the vertical axis 114, while in other embodiments, the reservoir 102 may have a removable lid or fixed surface to enclose the upper most portion of the reservoir 102.

As described herein, the reservoir 102 may be considered to be oriented along the horizontal axis 116. For reference, the tape casting apparatus 100 may be described in relation to the horizontal axis 116 that is parallel to the length *l* of the reservoir 102, the vertical axis 114 that is parallel or substantially parallel to the height of the reservoir 102, and a transverse axis 117 that is parallel or substantially parallel to the width w of the reservoir 102. The vertical axis 114, the horizontal axis 116, and the transverse axis 117 are three mutually perpendicular directions.

As shown in FIG. 1, the reservoir 102 is positioned proximate to a foil sheet 108. The foil sheet 108 may engage with a lower most portion of the reservoir 102 along the vertical axis 114. In embodiments, the reservoir 102 rests on or is positioned sufficiently close to the foil sheet 108 so that the foil sheet 108 serves as a base of the reservoir 102. In embodiments, at least the first side wall 118 and the second side wall 119 engage with the foil sheet 108 so that a retained liquid within the reservoir 102 cannot pass between the first side wall 118 and the foil sheet 108 to escape the reservoir 102, nor can the liquid pass between the second side wall 119 and the foil sheet 108 to escape the reservoir 102. As depicted in FIG. 2, the dimensions of the foil sheet 108 may extend beyond the dimensions of the reservoir 102. For instance, the foil sheet 108 may have a larger length than the length between the first end 110 and the second end 112. In embodiments, the foil sheet 108 may have a larger width than the distance between the exterior surface of the first side wall 118 and the exterior surface of the second side wall 119. In other embodiments, the width of the foil sheet 108 may directly correspond to the distance between the first side wall 118 and the second side wall 119 such that the foil sheet 108 does not expand beyond the exterior surface of the first side wall 118 or the exterior surface of the second side wall 119 along the transverse axis 117. The foil sheet 108 may have any suitable thickness to maintain mechanical integrity while engaging with the tape casting apparatus 100, as discussed herein.

In embodiments, the foil sheet 108, or selected portions thereof, may be comprised of a transparent material. As used herein, "transparent" refers to a material which allows radiant energy of a selected wavelength to pass through. For example, as described below, the radiant energy used for curing could be ultraviolet light or laser light in the visible spectrum. Non-limiting examples of transparent materials include polymers, glass, and crystalline minerals such as sapphire or quartz.

The foil sheet 108 is a non-static surface of the reservoir 102, wherein the foil sheet 108 moves in relation to the fixed position of the reservoir 102. The foil sheet 108 is moveable or translatable along the horizontal axis 116. The foil sheet 108 may be moved or translated at any appropriate speed to efficiently create fluid flow within the tape casting apparatus 100 without exceeding the ability of the tape casting apparatus 100 to handle the speed of the fluid flow. In embodiments, portions of the foil sheet 108 that are positioned beyond the first end 110 and the second end 112 may be engaged with rollers (not shown) or other moving elements. The foil sheet 108 may be positioned to maintain tension between the rollers, at least between the first end 110 and the second end 112, to wind the foil sheet 108 from one roller to another and translate the foil sheet 108 beneath the reservoir 102. In embodiments, a portion of the foil sheet 108 that is extending between the rollers may be supported by one or more mechanical supports positioned below the foil sheet 108 along the vertical axis 114. Suitable mechanical supports (tables, frames, brackets, etc.-not shown) may be provided to support the foil sheet 108 or the rollers. Translation of the foil sheet 108 may be a linear movement along the horizontal axis 116 or the foil sheet 108 may be moved along a curved or otherwise sloped direction by the rollers. The foil sheet 108 moves or translates so that the foil sheet 108 proceeds from the first end 110 of the reservoir 102 to the second end 112 of the reservoir 102. It should be understood, however, that the direction of travel of the foil sheet 108 may be reversed such that foil sheet 108 proceeds from the second end 112 of the reservoir 102 to the first end 110 of the reservoir 102. The rollers may be driven by any appropriate means such as any combination of motors, actuators, feedback sensors, and/or user interface controls known to those of ordinary skill.

As shown in FIGS. 1 and 2, the tape casting apparatus 100 includes one or more blades 120 positioned within the reservoir 102 to interact with and process a slurry 146 (FIG. 4). Specifically, the blades 120 are positioned within the reservoir 102 to enable filtering and/or leveling of the slurry 146 (FIG. 4) as the slurry 146 (FIG. 4) passes through the reservoir 102. In embodiments, the dimensions and construction of each of the blades 120 within the reservoir 102 may be identical, while in other embodiments the blades 120 may have distinct dimensions or constructions to tailor each blade 120 for a particular task. The blades 120 may be straight blades with a substantially rectangular profile such that each blade 120 extends perpendicularly from the first side wall 118 and the second side wall 119. The blades 120 may extend from the first side wall 118 to the second side wall 119 such that blades 120 define a substantially planar surface. In other embodiments, the blades 120 may be curved or angled such that at least a portion of the blade 120 is not perpendicular to the first side wall 118 or the second side wall 119. The blades 120 may extend from the first side wall 118 to the second side wall 119 such that blades 120 define a concave or convex surface with a measurable curve or slope along the length of the blades 120. Furthermore, each of the blades 120 includes a blade tip 122 positioned at a bottom portion of the blade 120 with respect to the vertical axis 114, and positioned proximate the foil sheet 108. The blade tips 122 may have a sharp or angled profile, wherein the blade tips 122 include a cutting edge angle of less than or equal to about 45 degrees to interact with the slurry 146 (FIG. 4) within the reservoir 102 or the blade tips 122 may have a dull or rounded profile, wherein the blade tips 122 include a cutting edge angle of greater than or equal to about 45 degrees to interact with the slurry 146 (FIG. 4) within the reservoir 102. In some embodiments, each of the blade tips 122 may have identical profiles, while in other embodiments each of the blade tips 122 may have a distinct profile depending on the positioning of the blade tip 122 within the reservoir 102. The blades 120 may be made from any suitable rigid or semi-rigid material to withstand the pressures of the slurry 146 (FIG. 4) within the reservoir 102. The blades 120 may be made from any suitable metal, ceramic, polymeric, or composite material.

The tape casting apparatus 100 includes a casting blade 120a (e.g., a first blade) at least partially positioned within the reservoir 102. The casting blade 120a is a solid blade disposed within the reservoir 102 to interact with the slurry 146 (FIG. 4) to create a uniform cast layer of a desired thickness. The casting blade 120a has a first edge 124a positioned proximate to or coupled to the first side wall 118 and a second edge 126a positioned proximate to or coupled to the second side wall 119 so that the casting blade 120a extends across the width w of the reservoir 102 along the transverse axis 117. In some embodiments, the first edge 124a of the casting blade 120a is coupled to the first side wall 118 and the second edge 126a of the casting blade 120a is coupled to the second side wall 119. In alternative embodiments, the casting blade 120a may be positioned against, but not coupled to the first side wall 118 and/or the second side wall 119. Additionally, the casting blade 120a includes a first surface 127a and a second surface 128a opposite the first surface 127a. Furthermore, the casting blade 120a includes the first blade tip 122a positioned proximate the foil sheet 108, but vertically spaced along the vertical axis 114 above the foil sheet 108 at a casting height 152. The casting height 152 may be configured to control a layer height and uniformity of the slurry 146 (FIG. 4) exiting the reservoir 102 to produce the cast layer positioned on the foil sheet 108.

Furthermore, the tape casting apparatus 100 includes at least one filtering blade 120b (e.g., a second blade) at least partially positioned within the reservoir 102. The filtering blade 120b is a solid blade disposed within the reservoir 102 to interact with the slurry 146 (FIG. 4) before the slurry 146 (FIG. 4) reaches the casting blade 120a to improve the cast layer uniformity by preemptively removing impurities that can cause blockages beneath the casting blade 120a. The filtering blade 120b has a first edge 124b positioned proximate the first side wall 118 and a second edge 126b positioned proximate the second side wall 119 so that the filtering blade 120b extends across the internal width of the reservoir 102 along the transverse axis 117. In some embodiments, the first edge 124b of the filtering blade 120b is coupled to the first side wall 118 and the second edge 126b of the filtering blade 120b is coupled to the second side wall 119. In alternative embodiments, the filtering blade 120b may be positioned against, but not coupled to the first side wall 118 and/or the second side wall 119. Additionally, the filtering blade 120b includes a first surface 127b and a second surface 128b opposite the first surface 127b. Furthermore, the filtering blade 120b includes a second blade tip 122b positioned proximate the foil sheet 108, but vertically spaced along the vertical axis 114 above the foil sheet 108 at a filtering height 150. The filtering height 150 may be configured to filter out large agglomerates within the slurry 146 (FIG. 4) before the slurry 146 reaches the casting blade 120a to prevent streaking and other imperfections in the resulting cast layer exiting the reservoir 102.

In embodiments, the first blade tip 122a of the casting blade 120a and the second blade tip 122b of the filtering blade 120b may be spaced above the foil sheet 108 along the vertical axis 114 so that the filtering height 150 is larger than the casting height 152. In alternative embodiments, the first blade tip 122a and the second blade tip 122b may be spaced above the foil sheet 108 along the vertical axis 114 so that the filtering height 150 is equal to the casting height 152. In some embodiments, the positioning of the casting blade 120a and the filtering blade 120b in relation to the foil sheet 108 is stationary such that both the casting height 152 and the filtering height 150 are fixed. The fixed casting blade 120a and filtering blade 120b may be integrally formed or may be positioned within defined slots 132 extending vertically within the first side wall 118 and the second side wall 119. However, in other embodiments, the casting blade 120a and/or the filtering blade 120b may be dynamically coupled to the first side wall 118 and the second side wall 119 to enable the casting blade 120a and/or the filtering blade 120b to move along the vertical axis 114 in relation to the foil sheet 108. In addition, in some embodiments, the casting blade 120a and the filtering blade 120b may pivot about a coupling point to change an angle at which the slurry 146 (FIG. 4) interacts with each of the blades 120. The first edge 124a and the second edge 126a of the casting blade 120a may engage the first side wall 118 and the second side wall 119 respectively via a track system, a coupling peg system, or any comparable attachment mechanism that enables the height of the casting blade 120a within the reservoir 102 to be varied. Similarly, the first edge 124b and the second edge 126b of the filtering blade 120b may engage the first side wall 118 and the second side wall 119 respectively via a track system, a coupling peg system, or any comparable attachment mechanism that enables the height of the filtering blade 120b within the reservoir 102 to be varied. Furthermore, in embodiments where the casting blade 120a and the filtering blade 120b are dynamically coupled within the reservoir 102, the filtering height 150 and the casting height 152 may be manually adjusted prior to beginning the tape casting process or the filtering height 150 and the casting height 152 may be dynamically adjusted via an actuator 134 before or during the tape casting process to dynamically adjust the size of agglomerates to be filtered by the filtering blade 120b and/or adjust the amount of slurry 146 entering the second cavity 104b through a filtering slot 151 (e.g., such that the filtering slot 151 is sized so that agglomerates having a dimension greater than the filtering height 150 are unable to pass through). The actuator 134 may include a motor, such as a stepper motor or the like, and may be configured to enable vertical movement along vertical axis 114 to dynamically adjust the height of the cast layer and/or adjust the amount of slurry 146 exiting the second cavity 104b through a casting slot 153 (e.g., such that the casting slot 153 is sized so that only the portion of the slurry 146 that is below the casting height 152 is able to pass through). Additionally, the actuator 134 may be configured to enable the controlled tilting of the casting blade 120a and/or the filtering blade 120b about the coupling point to change an angle at which the slurry 146 (FIG. 4) interacts with each of the blades 120. 104b embodiments, each of the casting blade 120a and the filtering blade 120b may have a dedicated actuator 134 to enable independent motion of each of the blades 120.

Still referring to FIGS. 1-2, the casting blade 120a and at least one filtering blade 120b may be positioned within the reservoir 102 to define two or more cavities 104. The cavities 104 define sub-volumes of the entire reservoir 102 volume. The cavities 104 may be partially-enclosed spaces within the reservoir 102 that retain a portion of the slurry 146 (FIG. 4). The reservoir 102 may include a first cavity 104a that is bounded by the first end 110, the first side wall 118, the second side wall 119, and the filtering blade 120b. The first cavity 104a may be configured to accept a bulk amount of the slurry 146 (FIG. 4) as it enters the reservoir 102. Additionally, the reservoir 102 may include a second cavity 104b that is bounded by the casting blade 120a, the filtering blade 120b, the first side wall 118, and the second side wall 119. In embodiments, the reservoir 102 may include additional filtering blades 120b positioned nearer to the first end 110 and away from the casting blade 120a. The additional filtering blades 120b may define a third cavity, a fourth cavity, a fifth cavity, etc. within the reservoir 102 between the first cavity 104a and the second cavity 104b. These additional cavities 104 may be bounded by two filtering blades 120b, the first side wall 118, and the second side wall 119.

The casting blade 120a and the filtering blade 120b are spatially positioned within the reservoir 102 to create cavities 104 with particular volumes. In some embodiments, the distance along the horizontal axis 116 between the first end 110 of the reservoir 102 and the filtering blade 120b is greater than a distance along the horizontal axis 116 between the filtering blade 120b and the casting blade 120a. This configuration enables the first cavity 104a to possess a greater volume of the slurry 146 (FIG. 4) than is contained by the second cavity 104b. In some embodiments, the ratio of the volume of the first cavity 104a to the volume of the second cavity 104b may be greater than or equal to 2:1, greater than or equal to 3:1, greater than or equal to 5:1, greater than or equal to 10:1, or even greater than or equal to 25:1. In other embodiments, the distance along the horizontal axis 116 between the first end 110 of the reservoir 102 and the filtering blade 120b is equal to the distance along the horizontal axis 116 between the filtering blade 120b and the casting blade 120a to configure the first cavity 104a to have the same volume of the slurry 146 (FIG. 4) as the second cavity 104b.

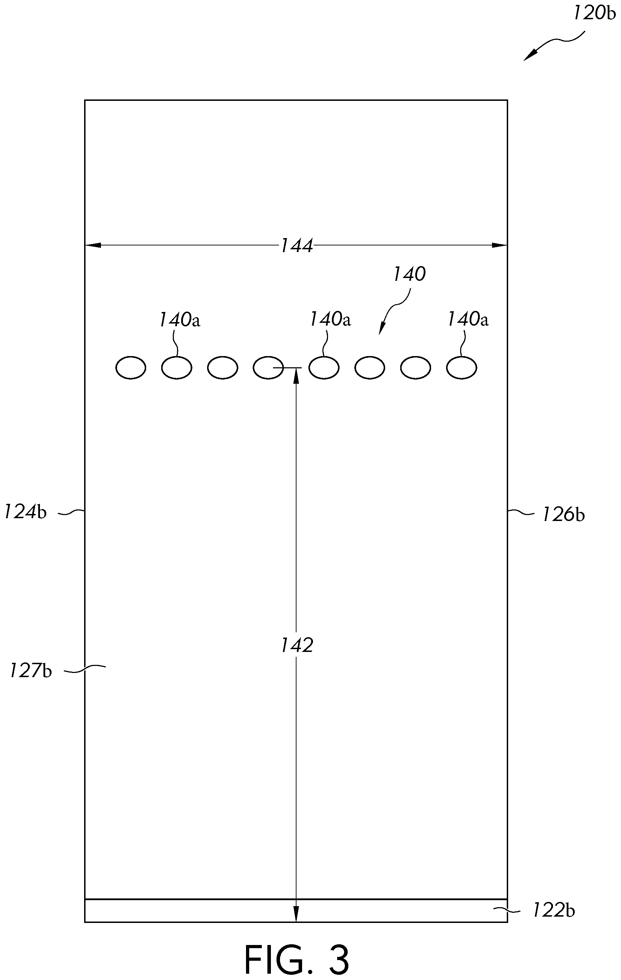

Referring to FIG. 3, the one or more second blades 130 each further include an overflow control feature 140. The overflow control feature 140 may define an overflow control feature 140 extending through the face of the filtering blade 120b from the first surface 127b thereof to the second surface 128b (FIG. 2) thereof that permits the fluid communication through the overflow control feature 140. In some embodiments, the overflow control feature 140 may define an uppermost portion of the filtering blade 120b along the vertical axis 114 that permits fluid communication over the overflow control feature 140. In some embodiments, the filtering blade 120b includes an overflow control feature 140 that extends along a width 144 of the filtering blade 120b, extending from the first edge 124b to the second edge 126b. In embodiments, the overflow control feature 140 may include a plurality of bores 140a. The spacing between each bore 140a in the overflow control feature 140 may be uniform or equally spaced along the width 144 of the filtering blade 120b. Alternatively, the bores 140a of the overflow control feature 140 may be irregularly or unequally spaced along the width 144 of the filtering blade 120b. The overflow control feature 140 can include any number of individual bores 140a with any applicable size or cross-sectional shape to permit fluid communication through the overflow control feature 140. Each bore 140a of the overflow control feature 140 may be uniform in size and cross-sectional shape or each bore 140a may have a unique size and cross-sectional shape. More specifically, the plurality of bores 140a may each have a circular, ovular, square, or other polygonal cross-section to create a sufficient cross-sectional area for a fluid to pass through each bore 140a. In some embodiments, the overflow control feature 140 may be a single bore 140a of any suitable cross-section, disposed within the filtering blade 120b. In some embodiments, the overflow control feature 140 may be the uppermost portion of the filtering blade 120b. In embodiments, the bores 140a of the overflow control feature 140 may each have a diameter that is greater than or equal to 1 mm, greater than or equal to 2.5 mm, greater than or equal to 5 mm, greater than or equal to 7.5 mm, greater than or equal to 10 mm, greater than or equal to 12.5 mm, or even greater than or equal to 15 mm. In one specific embodiment, the bores 140a of the overflow control feature 140 each have a diameter of about 6.35 mm.

The overflow control feature 140 may be arranged in a single layer extending linearly across the width 144 of the filtering blade 120b. The overflow control feature 140 is positioned along the vertical axis 114 (FIG. 1) at an overflow height 142 such that the overflow control feature 140 is uniformly spaced along the vertical axis 114 or, put another way, has a uniform height from the blade tip 122b of the filtering blade 120b. The overflow height 142 may be configured based on the particular fluid dynamics of the tape casting apparatus 100. In one embodiment, the overflow height 142 is vertically spaced from the blade tip 122b of the filtering blade 120b at a height that is about 2/3 of a total height of the filtering blade 120b. As discussed herein, in embodiments the vertical positioning of the filtering blade 120b may be varied according to manual or automatic methods to enable a user to further manipulate the overflow height 142.

As shown in FIG. 4, and as discussed hereinabove, the reservoir 102 contains a slurry 146. In embodiments, the slurry 146 may be composed of ceramic particles suspended in a curable photopolymer resin. In other embodiments, the slurry 146 may also contain metal particles and other additives. In embodiments, the photopolymer resin is radiant-energy curable and is capable of binding together to form a printed part when exposed to radiant energy. As used herein, the term "radiant-energy curable" refers to any material which solidifies in response to the application of radiant energy of a particular frequency and energy level. For example, the slurry 146 may include a known type of photopolymer resin containing photo-initiator compounds functioning to trigger a polymerization reaction, causing the resin to change from a liquid state to a solid state. Alternatively, the slurry 146 may include a material which contains a solvent that may be evaporated out by the application of radiant energy.

Generally, the slurry 146 should be flowable so that it can efficiently pass through the reservoir 102 to interact with the casting blade 120a and the filtering blade 120b. The rheology of the slurry 146 may be tuned according to the specific geometry of the reservoir 102 and the configuration of the cavities 104. For instance, the slurry 146 may be of a sufficient viscosity to avoid excessive running after being casted, yet the slurry 146 is capable of efficiently passing between the filtering height 150 and the casting height 152.

Referring still to FIG. 4, the slurry 146 is introduced to the reservoir 102 to fill the first cavity 104a through an inlet 160. The slurry 146 may be manually introduced to the reservoir 102 via pouring, siphoning, or other equivalent methods or the slurry 146 may be introduced into the first cavity 104a by an automated process, such as an automated pumping system, a hopper feeding system, or any other equivalent mechanism. The slurry 146 is disposed within the first cavity 104a to rest on the foil sheet 108. Translation of the foil sheet 108 along the horizontal axis 116 imparts fluid flow to the slurry 146 to generally direct the slurry 146 from the first end 110 towards the second end 112 to exit through an outlet 162. In some embodiments, the casting slot 153 and the outlet 162 are distinct while in other embodiments the casting slot 153 and the outlet 162 may define a single region. It should be understood that the direction of travel of the foil sheet 108 may be reversed such that the foil sheet 108 may also direct the slurry 146 from the second end 112 toward the first end 110. In embodiments, the blade tips 122 may include a cutting edge on either side of the blades 120 to enable the blades 120 to interface the slurry 164 in either direction. In embodiments, the blades 120 may be reconfigured to face an appropriate direction when the direction of travel of the foil sheet 108 is reversed.

The various portions of the reservoir 102 are in fluid communication to enable continuous fluid flow from the first end 110 toward the second end 112. The first cavity 104a is configured to maintain fluid communication with the second cavity 104b through the filtering slot 151. The filtering slot 151 makes up the region bounded by the first side wall 118 (FIG. 2), the second side wall 119 (FIG. 2), the foil sheet 108, and the second blade tip 122b of the filtering blade 120b. The filtering slot 151 has a height along the vertical axis 114 equivalent to the filtering height 150. Similarly, the second cavity 104b includes one or more openings to enable fluid flow out of the second cavity 104b through the casting slot 153. The casting slot 153 makes up the region bounded by the first side wall 118, the second side wall 119, the foil sheet 108, and first blade tip 122a of the casting blade 120a. The casting slot 153 has a height along the vertical axis 114 equivalent to the casting height 152.

As depicted in FIG. 4, the flow of the slurry 146 from the first end 110 toward the second end 112 causes the slurry 146 to interact with the casting blade 120a and the filtering blade 120b within the reservoir 102. As the slurry 146 flows along the horizontal axis 116, the slurry 146 positioned within the first cavity 104a reaches the filtering blade 120b. A portion of the slurry 146 positioned proximate the foil sheet 108 may pass under the filtering blade 120b at a vertical height that is less than the filtering height 150 to enter the second cavity 104b. However, another portion of the slurry 146 positioned above the filtering height 150 translates along the horizontal axis 116 and interacts with the first surface 127b of the filtering blade 120b. In so doing, the slurry 146 forms a circular first wave 148a within the first cavity 104a rolling backwards towards the first end 110 that causes the slurry 146 to circulate within the first cavity 104a. Additionally, as the slurry 146 flows along the horizontal axis 116, the slurry 146 positioned within the second cavity 104b reaches the casting blade 120a. A portion of the slurry 146 positioned proximate the foil sheet 108 may pass under the casting blade 120a at a vertical height that is less than the casting height 152 to exit the tape casting apparatus 100 as the cast layer. However, another portion of the slurry 146 positioned above the casting height 152 translates along the horizontal axis 116 and interacts with the first surface 127a of the casting blade 120a. In so doing, the slurry 146 forms a circular second wave 148b within the second cavity 104b rolling backwards towards the second surface 128b of the filtering blade 120b that causes the slurry 146 to circulate within the second cavity 104b. In an embodiment, the height of the slurry 146 within the first cavity 104a is maintained at height along the vertical axis 114 that is greater than the height of the first wave 148a within the first cavity 104a to prevent the slurry 146 from having a turbulent flow at its surface that would introduce additional air content within the slurry 146 that may adversely affect the cast layer. Additionally, the height of the slurry 146 within the second cavity 104b is maintained at height along the vertical axis 114 that is greater than the height of the second wave 148b within the second cavity 104b to prevent the slurry 146 from having a turbulent flow at its surface that would introduce additional air content within the slurry 146 that may adversely affect the uniformity of the cast layer.

Referring to FIGS. 3-4, the tape casting apparatus 100 may further provide for additional fluid communication between the first cavity 104a and the second cavity 104b via the overflow control feature 140 positioned within the filtering blade 120b. Because the translation rate of the foil sheet 108 is constant along the length *l* of the reservoir 102, and because the filtering height 150 is greater than the casting height 152, the amount of slurry 146 entering the second cavity 104b exceeds the amount of slurry 146 exiting the second cavity 104b to pass through the outlet 162 and form the cast layer. Accordingly, the height of the slurry 146 within the second cavity 104b will increase such that it is greater than the height of the slurry 146 within the first cavity 104a. The overflow control feature 140 may be positioned within the filtering blade 120b to enable a portion of the slurry 146 within the second cavity 104b to overflow back into the first cavity 104a to prevent the height of the slurry 146 within the second cavity 104b from exceeding a threshold height limit.

The overflow control feature 140 is positioned at the overflow height 142 to balance the volume of the slurry 146 within the first cavity 104a with the volume of the slurry 146 within the second cavity 104b. The positioning of the overflow control feature 140 provides tuning of the overflow height 142 to optimize the fluid flow conditions within the tape casting apparatus 100. In addition, overflow control feature 140 enables recirculation of a portion of the slurry 146 to ensure that the portion of the slurry 146 passes under the filtering blade 120b a plurality of times to reduce the likelihood that large agglomerates and other impurities reach the casting blade 120a to potentially create blockages at the casting height 152 that may lead to streaking or other imperfections in the cast layer. In embodiments, the overflow height 142 may be positioned so that the height of the slurry 146 within the second cavity 104b will be positioned to ensure the surface of the slurry 146 is greater than the height of the second wave 148b within the second cavity 104b but also positioned to ensure that the height of the slurry 146 within the second cavity 104b does not exceed a threshold limit. Furthermore, in embodiments, the size and configuration of the overflow control feature 140 may be adjusted to optimize overflow dynamics to ensure that the portion of the slurry 146 flowing from the second cavity 104b back to the first cavity 104a does not create turbulent flow that would introduce unwanted air content into the slurry 146.

FIG. 5 depicts a flow diagram of an illustrative method 200 for passing the slurry 146 through the tape casting apparatus 100 (FIG. 1). At block 202, the method 200 includes filling the first cavity 104a of the reservoir 102 with the slurry 146 by introducing the slurry 146 through the inlet 160. The slurry 146 is positioned on the foil sheet 108 that forms the base or bottom surface of the reservoir 102. At block 204, the method 200 includes translating the foil sheet 108 to move the slurry 146 to interface with the second blade 130 and direct the slurry 146 toward the filtering slot 151. The foil sheet 108 may translate along the horizontal axis 116 to induce a fluid flow of the slurry 146 from the first end 110 towards the second end 112. At block 206, the method 200 includes passing the slurry 146 through the filtering slot 151 to fill the second cavity 104b. A portion of the slurry 146 may pass under the filtering blade 120b at a vertical height that is less than the filtering height 150 to enter the second cavity 104b, while another portion of the slurry 146, positioned above the filtering height 150, interacts with the first surface 127b of the filtering blade 120b and forms the first wave 148a within the first cavity 104a rolling backwards towards the first end 110 that causes the slurry 146 to circulate within the first cavity 104a.

Once the second cavity 104b has filled, at block 208, the method 200 includes recirculating a portion of the slurry 146 from the second cavity 104b into the first cavity 104a through the overflow control feature 140 defined within the filtering blade 120b at the overflow height 142. The overflow control feature 140 and the filtering slot 151 permit two-way fluid communication between the first cavity 104a and the second cavity 104b, wherein the amount of slurry 146 entering the second cavity 104b via the filtering slot 151 and the amount of slurry 146 exiting the second cavity 104b through the overflow control feature 140 and through the casting slot 153 are approximately equal such that the height of the slurry 146 within the first cavity 104a and the height of the slurry 146 within the second cavity 104b remains relatively constant during the method 200. At block 210, the method 200 includes casting the slurry 146 through the casting slot 153 to exit the reservoir 102 through the outlet 162 to produce a uniform cast layer with minimal streaking and a height corresponding to the casting height 152.

In embodiments, the method 200 may further include positioning the casting blade 120a and the filtering blade 120b at the fixed casting height 152 and the filtering height 150 respectively prior to filling the reservoir 102 with the slurry 146. In other embodiments, the method 200 may include selectively controlling the casting height 152 and the filtering height 150 after filling the reservoir 102 with the slurry 146. The positioning of the casting blade 120a and the filtering blade 120b may be dynamically adjusted via the actuator 134 during the method 200 after the slurry 146 has been added to the reservoir 102. The actuator 134 may include a motor, such as a stepper motor or the like, and may be configured to enable vertical movement along vertical axis 114 or the actuator 134 may be configured to enable the controlled tilting of the casting blade 120a and/or the filtering blade 120b about a coupling point to change the angle at which the slurry 146 interacts with each of the casting blade 120a and the filtering blade 120b.

In embodiments, the method 200 may further include positioning the filtering blade 120b such that the overflow control feature 140 comprises a single layer of bores 140a positioned at the overflow height 142 wherein each bore 140a is positioned a uniform height from the foil sheet 108. In embodiments, the positioning the filtering blade 120b may include positioning the overflow height 142 along the vertical axis 114 at a height spaced from the second blade tip 122b of the filtering blade 120b at a height that is about 2/3 of the total height of the filtering blade 120b. In further embodiments, the method 200 may further include positioning the overflow control feature 140 at the overflow height 142 such that the height of the slurry 146 within the second cavity 104b is greater than the height of the second wave 148b formed within the slurry 146 due to an interaction of the slurry 146 with the casting blade 120a.

The method and apparatus described herein has several advantages over the conventional apparatuses. In particular, the design reduces streaking by catching large agglomerates on the filtering blade(s) before casting, improves the slurry rheology by reducing air incorporation into the slurry due to the presence of the overflow control feature, and improves the cast layer uniformity by preventing disruptions at the casting slot caused by blockages beneath the casting blade. Furthermore, the method and apparatus described herein can prevent tears or damage to the foil sheet caused by oversized agglomerates wedging beneath the first or second blades.

It should now be understood that the present disclosure relates to an apparatus and method for creating a cast layer, wherein the tape casting apparatus features at least a casting and filtering blade to process a liquid slurry and an overflow control feature to permit recirculation of the slurry from a second cavity back into a first cavity. All of the features disclosed in this specification (including any accompanying claims, abstract and drawings), and/or all of the steps of any method or process so disclosed, may be combined in any combination, except combinations where at least some of such features and/or steps are mutually exclusive.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Each of the components described above may be combined or added together in any permutation to define embodiments disclosed herein. Accordingly, the present specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

It is noted that the various embodiments described herein may include other components and/or functionality. It is further noted that while various embodiments refer to a tape casting apparatus and method for an additive manufacturing process, various other systems may be utilized in view of embodiments described herein. For example, embodiments may be utilized in not additive manufacturing settings like in wet synthesis manufacturing process, such as tape manufacturing processes, paper manufacturing processes, or the like. As such, references to a tape casting apparatus, a tape casting method, and the like, are understood to include other wet syntheses techniques that form a liquid slurry into a cast layer. The present disclosure is not restricted to the details of the foregoing embodiment(s). The present disclosure extends to any novel one, or any novel combination, of the features disclosed in this specification (including any accompanying claims, abstract and drawings), or to any novel one, or any novel combination, of the steps of any method or process so disclosed.

Additional aspects of the invention are provided by the subject matter of the following clauses:

A tape casting apparatus, comprising: a reservoir further comprising a first side wall, a second side wall opposite the first side wall, and a foil sheet being moveable along a horizontal axis from a first end of the reservoir to a second end of the reservoir and extending between the first side wall and the second side wall; a first blade positioned within the reservoir, the first blade having a first edge proximate the first side wall, a second edge coupled to the second side wall, and a first blade tip positioned proximate the foil sheet at a casting height; and a second blade positioned within the reservoir, the second blade having a first edge proximate the first side wall, a second edge proximate the second side wall, and a second blade tip positioned proximate the foil sheet at a filtering height, wherein the second blade defines an overflow control feature formed therein, wherein the first end, the first side wall, the second side wall, and the second blade define a first cavity and wherein the first blade, the second blade, the first side wall, and the second side wall define a second cavity such that the first cavity is in fluid communication with the second cavity between the foil sheet and the second blade and through the overflow control feature.

The tape casting apparatus of any preceding clause, wherein the filtering height is larger than the casting height.

The tape casting apparatus of any preceding clause, wherein a distance between the first end of the reservoir and the second blade is greater than a distance between the second blade and the first blade.

The tape casting apparatus of any preceding clause, wherein both the first blade and the second blade are stationary such that the casting height and the filtering height are fixed.

The tape casting apparatus of any preceding clause, wherein both the first blade and the second blade are movable along a vertical axis perpendicular to the horizontal axis.

The tape casting apparatus of any preceding clause, wherein the overflow control feature comprises a plurality of bores that are equally spaced along a width of the second blade.

The tape casting apparatus of any preceding clause, wherein the plurality of bores comprises a single layer of bores positioned at an overflow height such that each bore has a uniform height from the second blade tip of the second blade.

The tape casting apparatus of any preceding clause, wherein the overflow height is vertically spaced from the second blade tip of the second blade at a height that is about 2/3 of a total height of the second blade.

The tape casting apparatus of any preceding clause, wherein each of the plurality of bores further comprises a diameter of about 6.35 mm.

The tape casting apparatus of any preceding clause, further comprising two or more second blades positioned within the reservoir.

The tape casting apparatus of any preceding clause, wherein the first blade and the second blade each comprising a straight blade such that the first blade and the second blade are perpendicular to the first side wall and the second side wall.

The tape casting apparatus of any preceding clause, the first blade and the second blade each comprising a curved blade such that the first blade and the second blade are not perpendicular to the first side wall and the second side wall.

A method for using a tape casting apparatus, the method comprising: filling a first cavity of a reservoir with a slurry, wherein the reservoir comprises a foil sheet that is moveable along a horizontal axis from a first end of the reservoir to a second end of the reservoir, translating the foil sheet to move the slurry from the first end of the reservoir toward the second end of the reservoir to interface a second blade and direct the slurry through a filtering slot defined by a first side wall, a second side wall, the foil sheet, and a second blade tip of the second blade, wherein the second blade tip of the second blade is positioned at a filtering height vertically spaced from the foil sheet along a vertical axis perpendicular to the horizontal axis; passing the slurry through the filtering slot to fill a second cavity defined by a first blade, the second blade, the first side wall, and the second side wall; recirculating a portion of the slurry in the second cavity into the first cavity through an overflow control feature defined within the second blade at an overflow height when a height of the slurry in the second cavity reaches the overflow height; and casting the slurry through a casting slot to produce a cast layer, wherein the casting slot is defined by the first side wall, the second side wall, the foil sheet, and a first blade tip of the first blade, wherein the first blade tip of the first blade is positioned at a casting height that vertically spaced from the foil sheet along the vertical axis.

The method of any preceding clause, wherein the filtering height is larger than the casting height.

The method of any preceding clause, wherein a distance between the first end and the second blade is greater than a distance between the second blade and the first blade.

The method of any preceding clause, further comprising positioning the first blade and the second blade at the casting height and the filtering height respectively prior to filling the reservoir with the slurry.

The method of any preceding clause, further comprising selectively controlling the casting height and the filtering height after filling the reservoir with the slurry.

The method of any preceding clause, wherein the overflow control feature comprises a single layer of bores positioned at the overflow height such that each bore has a uniform height from the second blade tip of the second blade.

The method of any preceding clause, wherein the overflow height is vertically spaced from the second blade tip of the second blade at a height that is about 2/3 of a total height of the second blade.

The method of any preceding clause, further comprising positioning the second blade between the first end and the first blade along the horizontal axis, wherein the translating the foil sheet to move the slurry directs the slurry to interface with the second blade and pass through the filtering slot prior to casting the slurry through the casting slot to produce a cast layer.

The method of any preceding clause, further comprising positioning the overflow control feature at the overflow height such that a height of the slurry within the second cavity is greater than a height of a wave formed within the slurry due to an interaction of the slurry with the first blade.

The method of any preceding clause, wherein each of the first blade and the second blade includes a blade tip with a sharp or angled profile positioned at a bottom portion of the first blade or the second blade with respect to the vertical axis 114.

The method of any preceding clause, wherein each blade tip further comprises a cutting edge angle of less than or equal to 45 degrees.

The method of any preceding clause, wherein each blade tip further comprise a cutting edge angle of greater than or equal to 45 degrees.

The method of any preceding clause, wherein the first blade and second blade comprise a metallic, a ceramic, or a composite material.

The method of any preceding clause, further comprising forming translating the slurry along the horizontal axis to interact with a first surface of the second blade to form a first wave within the first cavity, rolling backwards towards the first end and causing the slurry to circulate within the first cavity.

The method of any preceding clause, further comprising moving the slurry along the horizontal axis to interact with a first surface of the second blade to form a second wave within the second cavity rolling backwards towards a second surface of the second blade and causing the slurry to circulate within the second cavity.

The method of any preceding clause, further comprising introducing the slurry to the reservoir to fill the first cavity through an inlet in fluid communication with the first cavity.

The method of any preceding clause, further comprising moving the slurry along the horizontal axis from the first end towards the second end to exit through an outlet in fluid communication with the second cavity.

The method of any preceding clause, wherein the outlet and the casting slot define a single region.

The method of any preceding clause, wherein the first side wall and the second side wall each define two or more slots extending vertically within the first side wall and the second side wall and the first blade and the second blade may be positioned within the slots.

The method of any preceding clause, further comprising an actuator coupled to one or both of the first blade and the second blade to dynamically adjust the position of the first blade and the second blade.

The method of any preceding clause, wherein the actuator includes a motor, such as a stepper motor, to move one or both of the first blade and the second blade along the vertical axis, relative to the first side wall and the second side wall.

The method of any preceding clause, wherein the actuator includes a motor, such as a stepper motor, to tilt one or more of the first blade and the second blade about a coupling point to change an angle at which the slurry interacts with each of the first blade and the second blade.

## Claims

1. A tape casting apparatus (100), comprising:
a reservoir (102) further comprising a first side wall (118), a second side (119) wall opposite the first side wall (118), and a foil sheet (108) being moveable along a horizontal axis (116) from a first end (110) of the reservoir (102) to a second end (112) of the reservoir (102) and extending between the first side wall (118) and the second side wall (119);
a first blade (120a) positioned within the reservoir (102), the first blade (120a) having a first edge (124a) proximate the first side wall (118), a second edge (126a) proximate the second side wall (119), and a first blade tip (122a) positioned proximate the foil sheet (108) at a casting height (152); and
a second blade (120b) positioned within the reservoir (102), the second blade (120b) having a first edge (124b) proximate the first side wall (118), a second edge (126b) proximate the second side wall (119), and a second blade tip (122b) positioned proximate the foil sheet (108) at a filtering height (150), wherein the second blade (120b) defines an overflow control feature (140) formed therein,
wherein the first end (110), the first side wall (118), the second side wall (119), and the second blade (120b) define a first cavity (104a) and wherein the first blade (120a), the second blade (120b), the first side wall (118), and the second side wall (119) define a second cavity (104b) such that the first cavity (104) is in fluid communication with the second cavity (104b) between the foil sheet (108) and the second blade (120b)and through the overflow control feature (140).

2. The tape casting apparatus (100) of claim 1, wherein the filtering height (150) is larger than the casting height (152).

3. The tape casting apparatus (100) of claim 1 or claim 2, wherein a distance between the first end (110) of the reservoir (102) and the second blade (120b) is greater than a distance between the second blade (120b) and the first blade (120a).

4. The tape casting apparatus (100) of any preceding claim, wherein both the first blade (120a) and the second blade (120b) are stationary such that the casting height (152) and the filtering height (150) are fixed.

5. The tape casting apparatus (100) of any preceding claim, wherein both the first blade (120a) and the second blade (120b) are movable along a vertical axis (114) perpendicular to the horizontal axis (116).

6. The tape casting apparatus (100) of any preceding claim, wherein the overflow control feature (140) comprises a plurality of bores (140a) that are equally spaced along a width (144) of the second blade (120b), extending from the first edge (124b) of the second blade (120b) to the second edge (126b) of the second blade (120b).

7. The tape casting apparatus (100) of claim 6, wherein the plurality of bores (140) comprises a single layer of bores (140) positioned at an overflow height (142) such that each bore (140) is positioned at a uniform height from the second blade tip (122b) of the second blade (120b).

8. The tape casting apparatus (100) of claim 6 or 7, wherein the overflow height (142) is vertically spaced from the second blade tip (122b) of the second blade (120b) at a height that is about 2/3 of a total height of the second blade (120b).

9. The tape casting apparatus (100) of claim 6, wherein each of the plurality of bores (140a) further comprises a diameter of about 6.35 mm.

10. The tape casting apparatus (100) of any preceding claim, further comprising two or more second blades (120b) positioned within the reservoir (102).

11. The tape casting apparatus (100) of any preceding claim, wherein the first blade (120a) and the second blade (120b) each comprising a straight blade such that the first blade (120a) and the second blade (120b) are perpendicular to the first side wall (118) and the second side wall (119).

12. The tape casting apparatus (100) of any preceding claim, wherein the first blade (120a) and the second blade each comprise a curved blade such that the first blade (120a) and the second blade (120b) are not perpendicular to the first side wall (118) and the second side wall (119).

13. A method (200) for using a tape casting apparatus (100), the method (200) comprising:
filling a first cavity (104a) of a reservoir (102) with a slurry (146), wherein the reservoir (102) comprises a foil sheet (108) that is moveable along a horizontal axis(116) from a first end (110) of the reservoir (102) to a second end (112)of the reservoir (102),
translating the foil sheet (108) to move the slurry (146) from the first end (110) of the reservoir (102) toward the second end (112) of the reservoir (102) to interface a second blade (120b) and direct the slurry (146) through a filtering slot (151) defined by a first side wall (118), a second side wall (119), the foil sheet (108), and a second blade tip (122b) of the second blade (120b), wherein the second blade tip (122b) of the second blade (120b) is positioned at a filtering height (150) vertically spaced from the foil sheet (108) along a vertical axis (114) perpendicular to the horizontal axis (116);
passing the slurry (146) through the filtering slot (151) to fill a second cavity (104b) defined by a first blade (120a), the second blade (120b), the first side wall (118), and the second side wall (119);
recirculating a portion of the slurry (146) in the second cavity (104b) into the first cavity (104a) through an overflow control feature (140) defined within the second blade (120b) at an overflow height (142) when a height of the slurry (146) in the second cavity (104b) reaches the overflow height (142); and
casting the slurry (146) through a casting slot (153) to produce a cast layer, wherein the casting slot ((153) is defined by the first side wall (118), the second side wall (119), the foil sheet (108), and a first blade tip (122a) of the first blade (120a), wherein the first blade tip (122a) of the first blade (120a) is positioned at a casting height (152) vertically spaced from the foil sheet (108) along the vertical axis (114).

14. The method of claim 13, wherein the filtering height (150) is larger than the casting height (152).

15. The method of claim 13 or 14, further comprising positioning the second blade (120b) between the first end (110) and the first blade (120a) along the horizontal axis (116), wherein the translating the foil sheet (108) to move the slurry (146) directs the slurry (146) to interface with the second blade (120b) and pass through the filtering slot (151) prior to casting the slurry (151) through the casting slot (153) to produce a cast layer.
